# EUROPEAN PATENT APPLICATION

(11) **EP 4 822 216 A1**
(43) Date of publication of application: **14.10.2026**
(21) Application number: 24900639.6
(22) Date of filing: 04.12.2024
(51) Int. Cl.: F16H 25/22

(54) **BALL SCREW**

(30) Priority: 04.12.2023 JP 2023204621
(71) Applicant: NSK Ltd., Tokyo 141-8560 (JP)
(72) Inventor: YABE Takayuki, Fujisawa-shi, Kanagawa 251-8501 (JP)
(74) Representative: Grünecker Patent- und Rechtsanwälte PartG mbB
(86) International application number: PCT/JP2024/042841
(87) International publication number: WO 2025/121345

(57) **Abstract**

A ball screw (10) comprises: a screw shaft formed with a screw shaft-side raceway groove (21); a nut (30) provided with a through-hole (32) formed with a circular cross-sectional shape to provide communication between an outer peripheral surface (33) and a nut-side raceway groove (31); a plurality of balls (26) that roll on a ball rolling path (25); and a circulation component (40) that forms a ball circulation path (45). The circulation component (40) has a cylindrical nut insertion part (42) that is fitted into the through-hole (32), and, at a tip of the nut insertion part (42), has a semi-cylindrical part (46) provided such that a rolling surface of the ball circulation path (45) is continuous with a rolling surface of the nut-side raceway groove (31), and a tongue portion (47) provided so as to enter the screw shaft-side raceway groove (21). A center line (C1) of the nut insertion part (42) is closer to an axis (O) of the nut (30) relative to a ball center trajectory (L) of the ball (26) scooped up in a tangential direction from the screw shaft-side raceway groove (21).

## Description

### TECHNICAL FIELD

The present invention relates to a ball circulation type ball screw.

### BACKGROUND ART

In a ball circulation type ball screw used in a machine tool or the like, it is necessary to scoop up balls arranged in a spiral ball rolling path (a load raceway) constituted by a raceway groove of a screw shaft and a raceway groove of a nut from the ball rolling path and return the balls from one end to the other end of the ball rolling path.

As a ball circulation system, a tube type, a spinning top type (also called a deflector type), an end cap type, and an end deflector type are known.

Depending on the circulation system, a circulation component in which a ball scooping portion and a ball return passage are integrally formed, a circulation component including a tube attached to a nut, a circulation component including a nut insertion portion formed with a tongue portion (a protrusion for guiding a ball to a passage in the circulation component) for scooping and guiding the ball to the ball return passage formed in the nut, or the like is used.

In such a ball circulation type ball screw, a tangential scooping method is used as a method for improving the allowable rotation speed of the ball screw. In the configuration of the tangential scooping method, as disclosed in Patent Literature 1, a circulation path for scooping up balls on a tangent line of a ball center circle diameter (BCD) is generally formed.

### CITATION LIST

### PATENT LITERATURE

Patent Literature 1: JP2014-84948A

### SUMMARY OF INVENTION

### TECHNICAL PROBLEM

However, in the structure in Patent Literature 1, since a ball passage (a ball circulation path) in the circulation component needs to have a structure in which a straight line and a curved line are combined, the cross-sectional shape of the nut insertion portion of the circulation component inserted into the nut is formed in an oval shape. Therefore, it takes time to form a hole in the nut, which leads to an increase in cost of the ball screw.

When the lead angle of a ball rolling path (a raceway groove of the nut) increases, the thickness of the outer diameter portion of the nut insertion portion inserted into the nut and the inner diameter portion of the ball passage obliquely opened in the lead angle direction decreases, and thus it is difficult to secure a thickness for providing sufficient strength to the nut insertion portion (particularly, the tongue portion) inserted into the nut.

The present invention has been made in view of the problems described above, and an object of the present invention is to provide a ball screw capable of imparting sufficient strength to a nut insertion portion of a circulation component while facilitating machining of a nut.

### SOLUTION TO PROBLEM

The above object of the present invention is implemented by the following configuration.
A ball screw including
a screw shaft having a spiral screw shaft side raceway groove formed on an outer peripheral surface,
a nut having a spiral nut side raceway groove formed on an inner peripheral surface so as to face the screw shaft side raceway groove, and having a pair of through holes that communicate an outer peripheral surface with the nut side raceway groove,
a plurality of balls that roll in a ball rolling path having the screw shaft side raceway groove and the nut side raceway groove, and
a circulation component that is attached to the through hole and that forms a ball circulation path for circulating the balls rolling in the ball rolling path,
in which the through hole has a circular cross section obliquely penetrating along a lead angle of the nut side raceway groove in an inner diameter direction and communicating with the nut side raceway groove,
in which the circulation component includes a cylindrical nut insertion portion that has a ball scooping portion provided at a distal end and that is fitted into the through hole, a semi-cylindrical portion provided at a distal end of the ball scooping portion such that a rolling surface of the ball circulation path is continuous with a raceway surface of the nut side raceway groove, and a tongue portion provided at the distal end of the ball scooping portion so as to enter the screw shaft side raceway groove, and
in which a center line of the nut insertion portion is closer to an axis of the nut with respect to a ball center locus of the balls scooped from the screw shaft side raceway groove in a tangential direction.

### ADVANTAGEOUS EFFECTS OF INVENTION

According to the present invention, it is possible to provide a ball screw capable of imparting sufficient strength to a nut insertion portion of a circulation component while facilitating machining of a nut.

The present invention has been briefly described above. Further, the details of the present invention will be further clarified by reading modes (hereinafter referred to as "embodiments") for carrying out the invention to be described below with reference to the accompanying drawings.

### BRIEF DESCRIPTION OF DRAWINGS

[FIG. 1] FIG. 1 is a plan view of a ball screw according to a first embodiment of the present invention.
[FIG. 2] FIG. 2 is a front view of the ball screw shown in FIG. 1 as viewed from the axis direction.
[FIG. 3] FIG. 3 is a partial cross-sectional front view of the ball screw shown in FIG. 2 as viewed from the axis direction.
[FIG. 4] FIG. 4 is a perspective view of a circulation component shown in FIG. 1.
[FIG. 5] FIG. 5 is an exploded perspective view of the circulation component shown in FIG. 4.
[FIG. 6] (a) to (d) of FIG. 6 are a front view, a side view, a bottom view, and a plan view of a ball scooping portion shown in FIG. 5.
[FIG. 7] FIG. 7 is an enlarged cross-sectional view of a main part of a nut and the circulation component shown in FIG. 1 as viewed from the axis direction in order to show a positional relationship among a ball rolling path in which balls roll, a nut insertion portion of the circulation component, and a through hole of the nut.
[FIG. 8] FIG. 8 is a plan view of a ball screw according to a second embodiment of the present invention.
[FIG. 9] FIG. 9 is a front view of the ball screw shown in FIG. 8 as viewed from the axis direction.
[FIG. 10] (a) and (b) of FIG. 10 are a plan view and a bottom view of a circulation component shown in FIG. 8.
[FIG. 11] (a) and (b) of FIG. 11 are an exploded plan view and an exploded bottom view of the circulation component shown in FIG. 10.
[FIG. 12] FIG. 12 is an enlarged cross-sectional view of a main part of a nut and the circulation component shown in FIG. 8 as viewed from the axis direction in order to show a positional relationship among a ball rolling path in which balls roll, a nut insertion portion of the circulation component, and a through hole of the nut.

### DESCRIPTION OF EMBODIMENTS

Hereinafter, a ball screw according to an embodiment of the present invention will be described in detail with reference to the drawings.

### (First Embodiment)

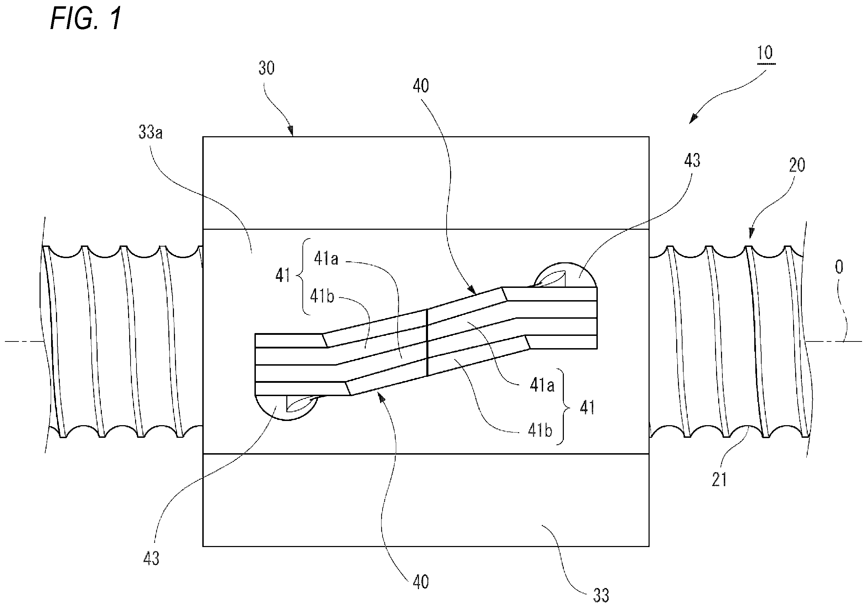

First, a ball screw according to a first embodiment will be described with reference to FIGS. 1 to 6.

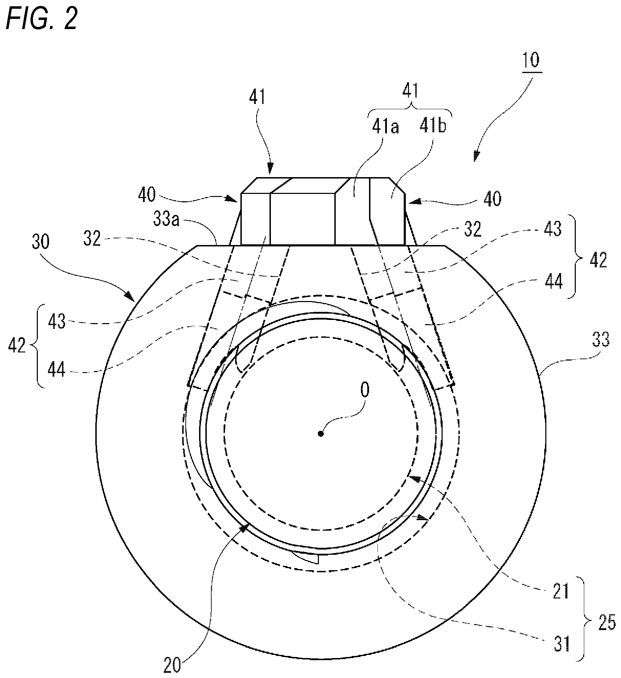

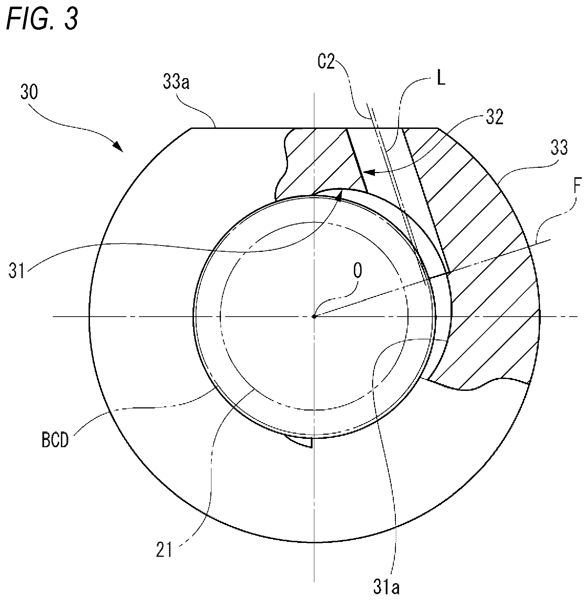

FIG. 1 is a plan view of a ball screw 10 according to a first embodiment of the present invention. FIG. 2 is a front view of the ball screw 10 shown in FIG. 1 as viewed from the axis direction. FIG. 3 is a partial cross-sectional front view of the ball screw 10 shown in FIG. 2 as viewed from the axis direction.

As shown in FIGS. 1 and 2, the ball screw 10 according to the first embodiment includes a screw shaft 20 having a spiral screw shaft side raceway groove 21 formed on the outer peripheral surface, a nut 30 having a spiral nut side raceway groove 31 formed on the inner peripheral surface so as to face the screw shaft side raceway groove 21, and having a pair of through holes 32 that communicate an outer peripheral surface 33 with the nut side raceway groove 31, a plurality of balls 26 that roll on a ball rolling path 25 having the screw shaft side raceway groove 21 and the nut side raceway groove 31, and a circulation component 40 that is attached to the through holes 32 and that forms a ball circulation path 45 circulating the balls 26 rolling on the ball rolling path 25.

As shown in FIGS. 2 and 3, the metal nut 30 is formed in a cylindrical shape, and the spiral nut side raceway groove 31 having the same lead as the screw shaft side raceway groove 21 is formed on the inner peripheral surface thereof. An attachment surface 33a parallel to an axis O of the nut 30 is formed on the outer peripheral surface 33 of the nut 30.

In the vicinity of two ends of the attachment surface 33a in the axis direction, through holes 32 having a circular cross section are formed which obliquely penetrate along the lead angle of the nut side raceway groove 31 in the inner diameter direction and communicate with the nut side raceway groove 31. The through hole 32 communicates with a space in the ball rolling path 25 formed in the ball screw 10.

The circulation component 40 forming a ball circulation path for circulating the plurality of balls 26 rolling on the ball rolling path 25 is attached to the attachment surface 33a. The circulation component 40 is fixed to the nut 30 via a pressing member or the like (not shown) screwed to the nut 30.

The ball 26 is a spherical body made of a steel material such as alloy steel, and rolls in the ball rolling path 25 formed by the screw shaft side raceway groove 21 and the nut side raceway groove 31 facing each other to screw the screw shaft 20 and the nut 30 and to support a load applied to the ball screw 10.

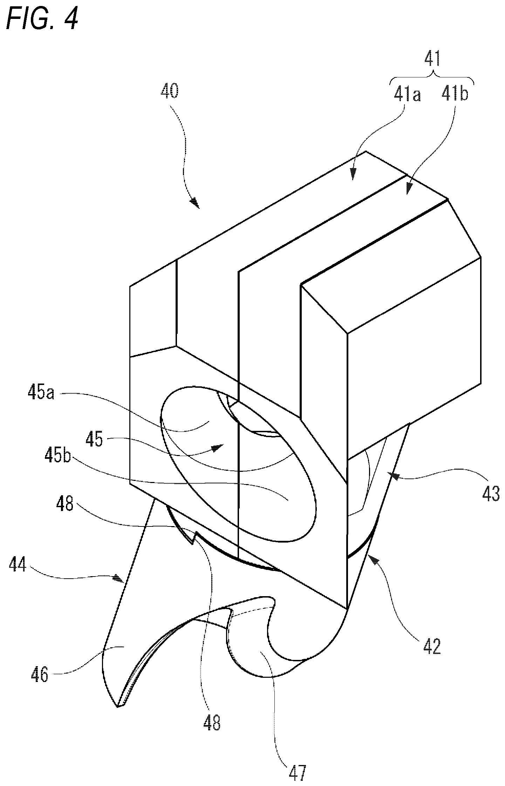

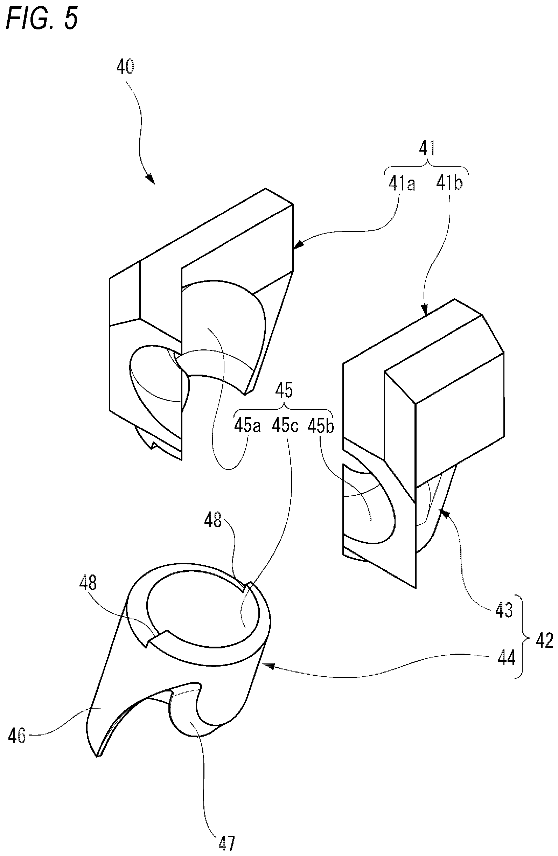

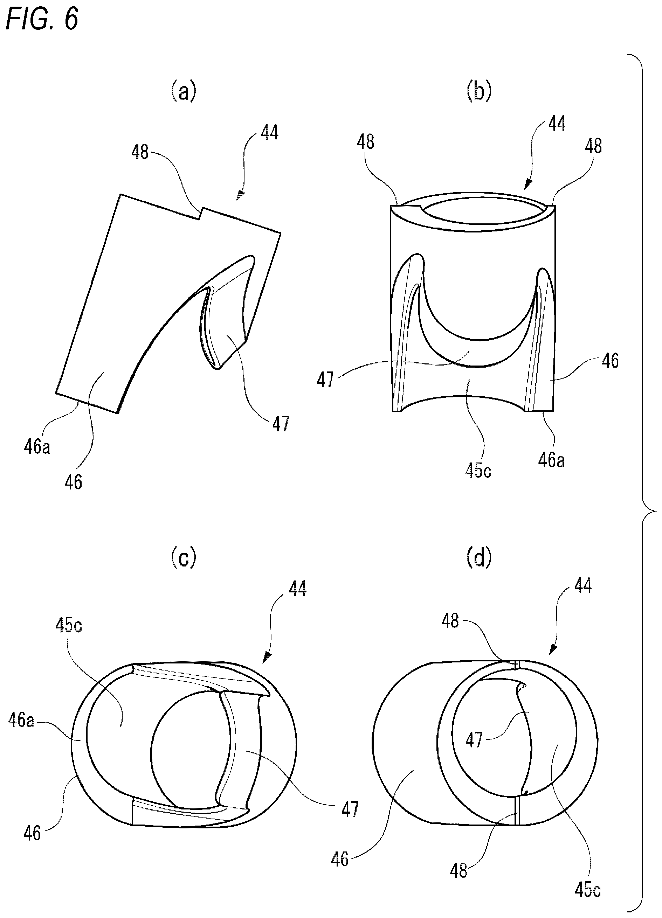

FIG. 4 is a perspective view of the circulation component 40 shown in FIG. 1. FIG. 5 is an exploded perspective view of the circulation component 40 shown in FIG. 4. (a) to (d) of FIG. 6 are a front view, a side view, a bottom view, and a plan view of a ball scooping portion 44 shown in FIG. 5.

As shown in FIG. 4, the circulation component 40 includes a cylindrical nut insertion portion 42 in which the ball scooping portion 44 is provided at the distal end and is fitted into the through hole 32, and a direction changing portion 41 having the ball circulation path 45 for changing the moving direction of the scooped balls 26 so as to be directed along the axial direction from the direction of the ball scooping portion 44 along the lead angle to another circulation portion.

As shown in FIG. 5, the ball scooping portion 44 having a rolling surface 45c with a circular cross section is separate from a base portion 43 of the nut insertion portion 42. The circulation component 40 includes a first component 41a and a second component 41b that respectively have rolling surfaces 45a and 45b having a semicircular cross section obtained by dividing the ball circulation path 45 into two parts along the ball center locus, and the ball scooping portion 44 such that the base portion 43 of the nut insertion portion 42 and the direction changing portion 41 are continuously formed.

By combining the first component 41a and the second component 41b with the ball scooping portion 44, the ball circulation path 45 for circulating the balls 26 is defined by the rolling surfaces 45a, 45b, and 45c.

The first component 41a and the second component 41b respectively having the rolling surfaces 45a and 45b for constituting the ball circulation path 45 in a complicated path formed by combining curves are formed by resin molding with a high degree of freedom in shape, sintering molding using metal powder, or the like.

The ball scooping portion 44, which needs to form a linear portion of several millimeters on the rolling surface 45c of the portion of the ball circulation path 45 adjacent to the ball rolling path 25, is formed by casting, cutting, or the like using a metal material having high strength in order to secure the strength of the distal end portion for scooping up the balls 26 and improve the durability.

As shown in (a) to (d) of FIG. 6, the ball scooping portion 44 includes a semi-cylindrical portion 46 formed at the distal end of the ball scooping portion 44 such that the rolling surface 45c of the ball circulation path 45 is continuous with a raceway surface 31a of the nut side raceway groove 31, and a tongue portion 47 formed at the distal end of the ball scooping portion 44 so as to enter the screw shaft side raceway groove 21.

In the circulation component 40, the first component 41a, the second component 41b, and the ball scooping portion 44 are integrally combined by being bonded to one another.

A rotation-preventing step portion 48 is formed on the abutting surfaces between the base portion 43 of the nut insertion portion 42 and the ball scooping portion 44, preventing the ball scooping portion 44 from rotating relative to the base portion 43 about a center line C1 of the nut insertion portion 42.

As shown in FIGS. 1 and 2, the nut insertion portions 42 of a pair of the circulation components 40 are inserted into the through holes 32 of the nut 30. The circulation components 40 are attached to the nut 30 such that the bottom surfaces of the direction changing portions 41 are placed on the attachment surface 33a of the nut 30 and the ball circulation paths 45 communicate with each other.

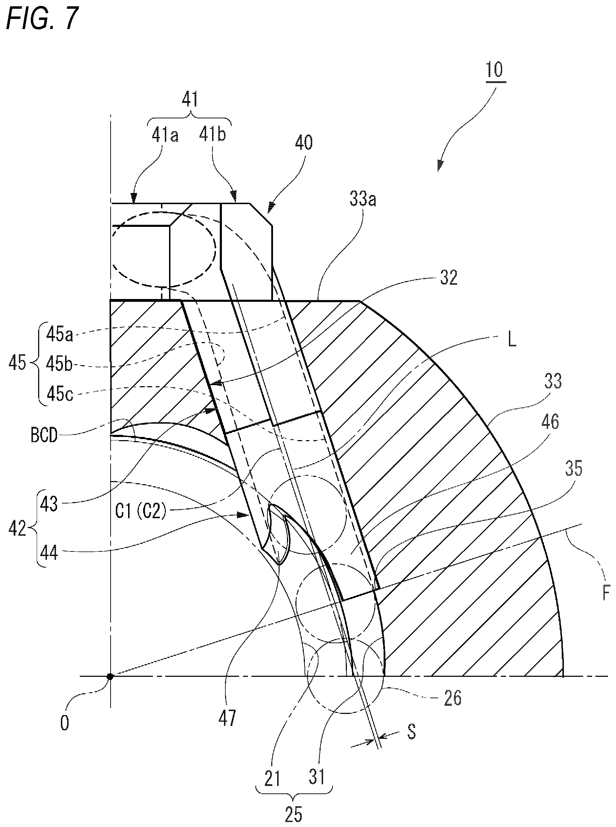

FIG. 7 is an enlarged cross-sectional view of a main part of the nut 30 and the circulation component 40 shown in FIG. 1 as viewed from the axis direction in order to show a positional relationship among the ball rolling path 25 in which the balls 26 roll, the nut insertion portion 42 of the circulation component 40, and the through hole 32 of the nut 30.

As shown in FIG. 7, in the ball screw 10 according to the first embodiment, the tongue portion 47 of the ball scooping portion 44 enters the screw shaft side raceway groove 21 by attaching the pair of circulation components 40 to the nut 30. The tongue portion 47 has a function of smoothly scooping up the balls 26 that have passed through the ball rolling path 25 to the ball circulation path 45 and a function of smoothly guiding the balls 26 that have passed through the ball circulation path 45 to the ball circulation path 45 on the tangent line of the ball center circle diameter (BCD) in the ball rolling path 25.

When the cylindrical nut insertion portion 42 is inserted into the through hole 32 having a circular cross section, the center line C1 of the nut insertion portion 42, which coincides with a center line C2 of the through hole 32, is closer to the axis O of the nut 30 by a distance S with respect to a ball center locus L of the balls 26 scooped from the screw shaft side raceway groove 21 in the tangential direction.

On the raceway surface 31a of the nut side raceway groove 31 facing a distal end surface 46a of the semi-cylindrical portion 46, a step portion 35 having a width dimension corresponding to the distal end thickness of the semi-cylindrical portion 46 is formed on a plane F including the axis O of the nut 30 and orthogonal to the center line of the through hole 32. Therefore, when the distal end surface 46a of the semi-cylindrical portion 46 inserted into the through hole 32 abuts against the step portion 35, the rolling surface 45c of the semi-cylindrical portion 46 can be smoothly continuous with the raceway surface 31a of the nut side raceway groove 31.

As described above, in the ball screw 10 according to the first embodiment, the through hole 32 formed in the nut 30 has a circular cross section.

That is, the machining of the through hole 32 in the nut 30 can be performed as single hole machining without oval machining that causes an increase in cost. Therefore, according to the ball screw 10 in the first embodiment, the machining operation of the nut 30 can be facilitated.

The nut insertion portion 42 of the circulation component 40 inserted into the through hole 32 of the nut 30 is implemented such that the center line C1 of the nut insertion portion 42 is closer to the axis O of the nut 30 by the distance S with respect to the ball center locus L of the balls 26 scooped from the screw shaft side raceway groove 21 in the tangential direction.

That is, in the ball screw 10, by appropriately setting the distance S between the center line C1 of the nut insertion portion 42 and the ball center locus L, a thickness corresponding to the distance S can be secured between the outer diameter of the nut insertion portion 42 and the inner diameter of the ball circulation path 45. Therefore, according to the ball screw 10 in the first embodiment, it is possible to easily secure a thickness for imparting sufficient strength to the semi-cylindrical portion 46 and the tongue portion 47 of the nut insertion portion 42.

In the ball screw 10 according to the first embodiment, the ball scooping portion 44 is separate from the base portion 43 of the nut insertion portion 42. Therefore, the base portion 43 in the nut insertion portion 42 and the ball scooping portion 44 can be formed using an optimum manufacturing method corresponding to each function. That is, the manufacturing cost of the nut insertion portion 42 can be reduced.

For example, the first component 41a and the second component 41b constituting the ball circulation path 45 in a complicated path can be formed by resin molding having a high degree of freedom in shape, sintering molding using metal powder, or the like. The ball scooping portion 44 that needs to ensure the strength of the distal end portion can be formed by casting, cutting, or the like using a metal material having high strength.

In the ball screw 10 according to the first embodiment, the rotation-preventing step portion 48 is formed on the abutting surfaces between the base portion 43 of the nut insertion portion 42 and the ball scooping portion 44, preventing the ball scooping portion 44 from rotating relative to the base portion 43 about the center line C1 of the nut insertion portion 42.

Therefore, it is possible to prevent the cylindrical ball scooping portion 44 fitted into the through hole 32 having a circular cross section from rotating about the center line C1 in the through hole 32.

### (Second Embodiment)

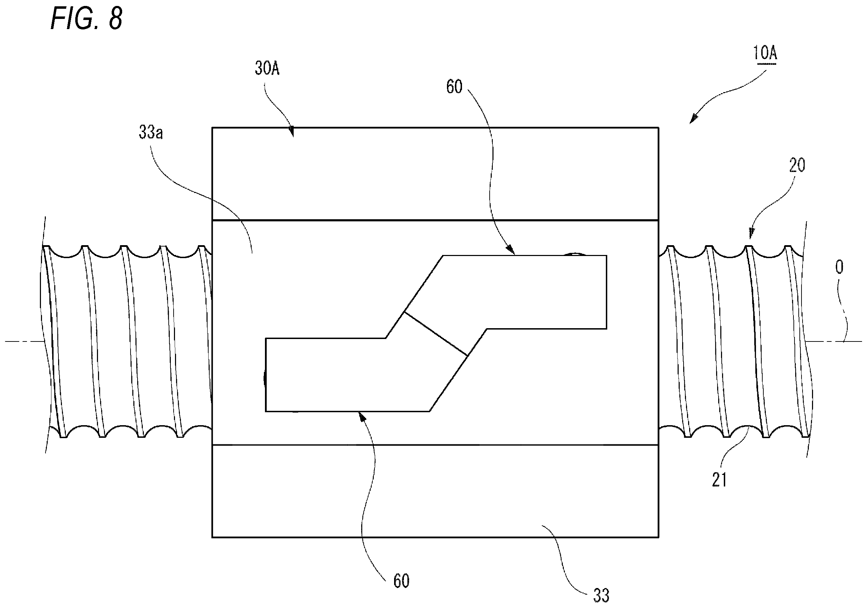

Next, a ball screw according to a second embodiment will be described with reference to FIGS. 8 to 11.

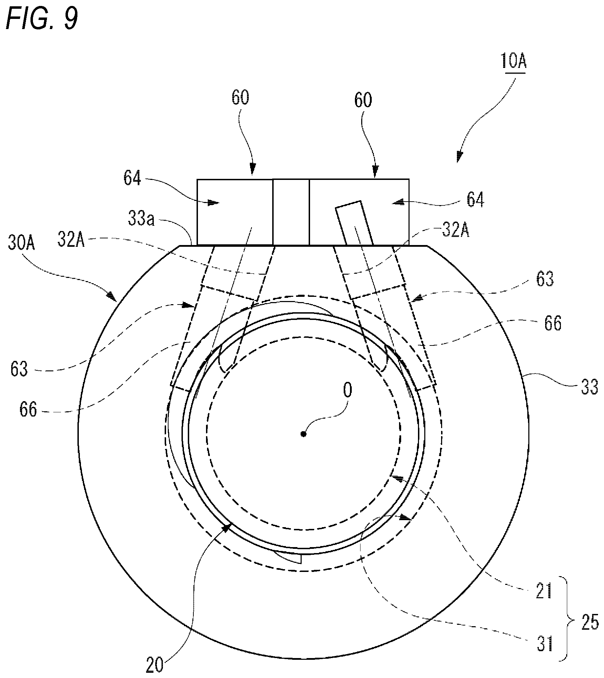

FIG. 8 is a plan view of a ball screw 10A according to the second embodiment of the present invention. FIG. 9 is a front view of the ball screw 10A shown in FIG. 8 as viewed from the axis direction.

The ball screw 10A according to the second embodiment is different from the ball screw 10 according to the first embodiment described above in that the circulation component 40 is changed to a circulation component 60. Since other configurations are substantially the same as those of the first embodiment described above, the same reference signs are given and the detailed description thereof will be omitted.

As shown in FIGS. 8 and 9, the ball screw 10A according to the second embodiment includes the screw shaft 20, a nut 30A, the plurality of balls 26, and the circulation component 60 that is attached to a through hole 32A of the nut 30A and that forms a ball circulation path 65 for circulating the balls 26 rolling in the ball rolling path 25.

As shown in FIG. 9, in the nut 30A according to the second embodiment, in the vicinity of two ends of the attachment surface 33a in the axis direction, through holes 32A having a circular cross section are formed which obliquely penetrate along the lead angle of the nut side raceway groove 31 in the inner diameter direction and communicate with the nut side raceway groove 31. The through hole 32A communicates with a space in the ball rolling path 25 formed in the ball screw 10A. An annular positioning portion 37 is formed in the intermediate portion of the through hole 32A, and the through hole 32A is a stepped hole.

The circulation component 60 forming a ball circulation path for circulating the plurality of balls 26 rolling on the ball rolling path 25 is attached to the attachment surface 33a. The circulation component 60 is fixed to the nut 30A via a pressing member or the like (not shown) screwed to the nut 30A.

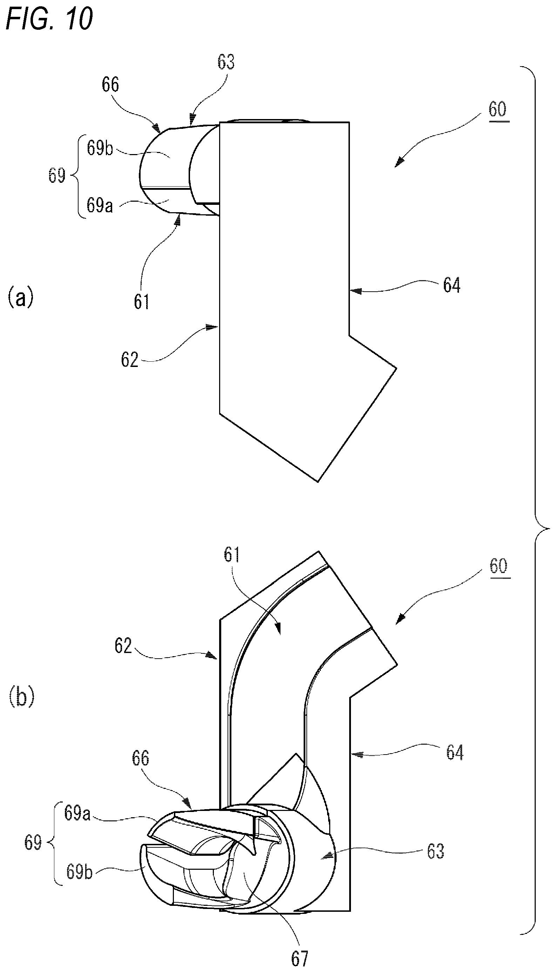

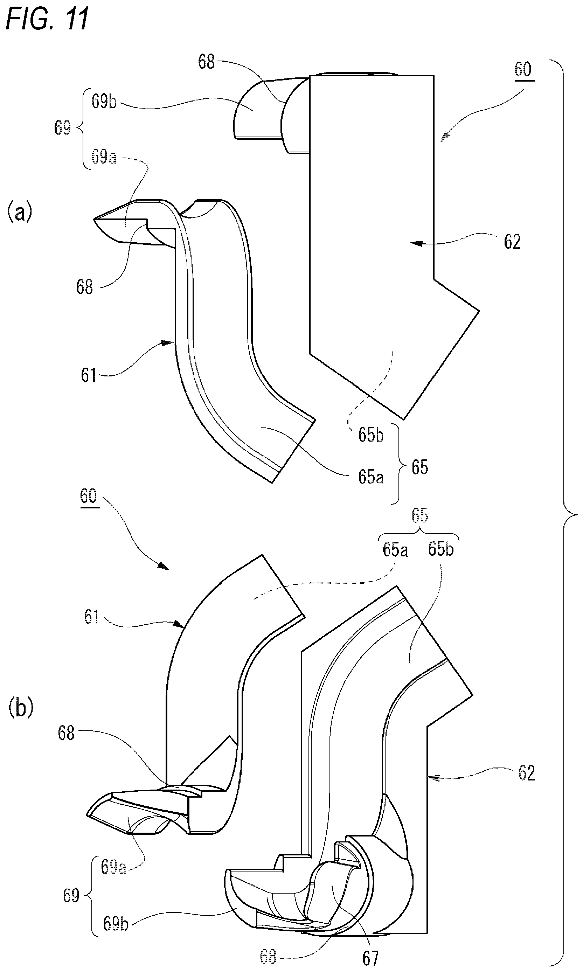

(a) and (b) of FIG. 10 are a plan view and a bottom view of the circulation component 60 shown in FIG. 8. (a) and (b) of FIG. 11 are an exploded plan view and an exploded bottom view of the circulation component 60 shown in FIG. 10.

As shown in (a) and (b) of FIG. 10, the circulation component 60 includes a cylindrical nut insertion portion 63 in which a ball scooping portion 66 is provided at the distal end and is fitted into the through hole 32A, and a direction changing portion 64 having the ball circulation path 65 for changing the moving direction of the scooped balls 26 so as to be directed along the axial direction from the direction of the ball scooping portion 66 along the lead angle to another circulation portion. An annular positioning step portion 68 that abuts against the positioning portion 37 of the through hole 32A is formed on the outer peripheral surface of the nut insertion portion 63.

As shown in (a) and (b) of FIG. 11, the circulation component 60 is implemented by integrally combining the first circulation component 61 and the second circulation component 62 having a shape in which at least the ball scooping portion 66 is divided into two in the axis O direction of the nut 30A.

The first circulation component 61 and the second circulation component 62 respectively have rolling surfaces 65a and 65b having a semicircular cross section obtained by dividing the ball circulation path 65 into two along the ball center locus such that the nut insertion portion 63 and the direction changing portion 64 are continuously formed. That is, by combining the first circulation component 61 and the second circulation component 62, the ball circulation path 65 for circulating the balls 26 is defined by the rolling surfaces 65a and 65b.

The first circulation component 61 and the second circulation component 62 respectively having the rolling surfaces 65a and 65b for constituting the ball circulation path 65 as a complicated path formed by combining curves are formed by resin molding with a high degree of freedom in shape, sintering molding using metal powder, or the like.

As shown in FIGS. 10 and 11, the distal end of the ball scooping portion 66 includes a semi-cylindrical portion 69 formed at the distal end of the ball scooping portion 66 such that the rolling surfaces 65a and 65b of the ball circulation path 65 are continuous with the raceway surface 31a of the nut side raceway groove 31, and a tongue portion 67 formed at the distal end of the ball scooping portion 66 so as to enter the screw shaft side raceway groove 21. The semi-cylindrical portion 69 includes a first portion 69a integrally formed with the first circulation component 61 and a second portion 69b integrally formed with the second circulation component 62.

As shown in FIGS. 8 and 9, the nut insertion portions 63 of a pair of the circulation components 60 are inserted into the through holes 32A of the nut 30A. The circulation components 60 are attached to the nut 30A such that the bottom surfaces of the direction changing portions 64 are placed on the attachment surface 33a of the nut 30A and the ball circulation paths 65 communicate with each other.

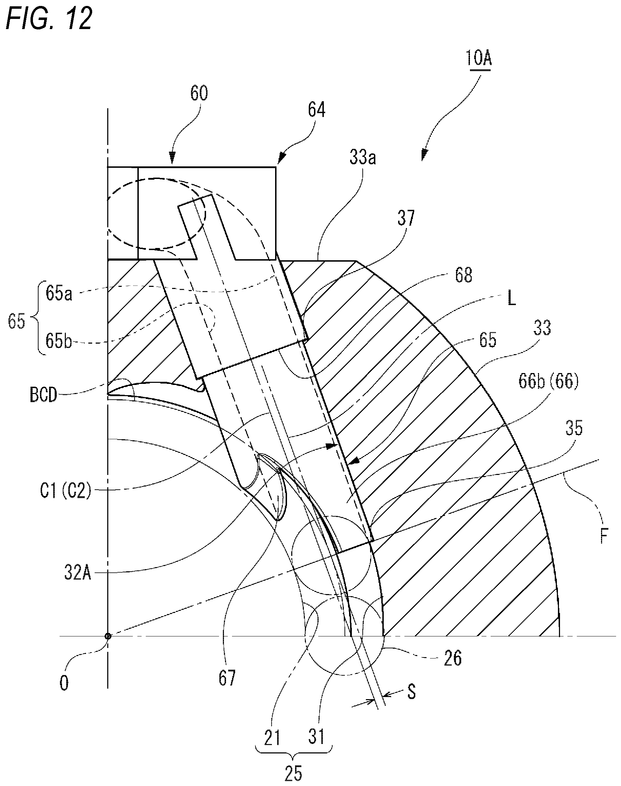

FIG. 12 is an enlarged cross-sectional view of a main part of the nut 30A and the circulation component 60 shown in FIG. 8 as viewed from the axis direction in order to show a positional relationship among the ball rolling path 25 in which the balls 26 roll, the nut insertion portion 63 of the circulation component 60, and the through hole 32A of the nut 30A.

As shown in FIG. 12, in the ball screw 10A according to the second embodiment, the tongue portion 67 of the ball scooping portion 66 enters the screw shaft side raceway groove 21 by attaching the pair of circulation components 60 to the nut 30A. The tongue portion 67 has a function of smoothly scooping up the balls 26 that have passed through the ball rolling path 25 to the ball circulation path 65 and a function of smoothly guiding the balls 26 that have passed through the ball circulation path 65 to the ball circulation path 65 on the tangent line of the ball center circle diameter (BCD) in the ball rolling path 25.

When the cylindrical nut insertion portion 63 is inserted into the through hole 32A having a circular cross section, the center line C1 of the nut insertion portion 63, which coincides with a center line of the through hole 32A, is closer to the axis O of the nut 30A by the distance S with respect to the ball center locus L of the balls 26 scooped from the screw shaft side raceway groove 21 in the tangential direction.

When the nut insertion portion 63 is inserted into the through hole 32A, the positioning step portion 68 formed on the outer peripheral surface of the nut insertion portion 63 abuts against the positioning portion 37 of the through hole 32A, so that the insertion position of the circulation component 60 is restricted.

The distal end surface of the semi-cylindrical portion 69 inserted into the through hole 32A abuts against the step portion 35, so that the rolling surfaces 65a and 65b of the semi-cylindrical portion 69 are smoothly continuous with the raceway surface 31a of the nut side raceway groove 31.

As described above, in the ball screw 10A according to the second embodiment, the through hole 32A formed in the nut 30A has a circular cross section.

That is, the machining of the through hole 32A in the nut 30A can be performed as stepped hole machining without oval machining that causes an increase in cost. Therefore, according to the ball screw 10A in the second embodiment, the machining operation of the nut 30A can be facilitated.

The nut insertion portion 63 of the circulation component 60 inserted into the through hole 32A of the nut 30A is implemented such that the center line C1 of the nut insertion portion 63 is closer to the axis O of the nut 30A by the distance S with respect to the ball center locus L of the balls 26 scooped from the screw shaft side raceway groove 21 in the tangential direction.

That is, in the ball screw 10A, by appropriately setting the distance S between the center line C1 of the nut insertion portion 63 and the ball center locus L, a thickness corresponding to the distance S can be secured between the outer diameter of the nut insertion portion 63 and the inner diameter of the ball circulation path 65. Therefore, according to the ball screw 10A in the second embodiment, it is possible to easily secure a thickness for imparting sufficient strength to the semi-cylindrical portion 69 and the tongue portion 67 of the nut insertion portion 63.

When the lead angle of the ball rolling path 25 becomes large, the thickness of the outer diameter portion of the ball scooping portion 66 inserted into the through hole 32A and the inner diameter portion of the ball circulation path 65 obliquely opened in the lead angle direction becomes small, and it may not be possible to secure the strength of the semi-cylindrical portion 69 and the tongue portion 67.

The ball screw 10A according to the second embodiment is implemented by integrally combining the first circulation component 61 and the second circulation component 62 having a shape in which at least the ball scooping portion 66 is divided into two in the axis O direction of the nut 30A. Therefore, it is easy to form the ball scooping portion 66 of the nut insertion portion 63 so as to have a shape obtained by removing the thin portion in which the strength cannot be ensured in the end portions of the semi-cylindrical portion 69 and the tongue portion 67 at the abutting end portions of the first circulation component 61 and the second circulation component 62.

Therefore, the ball scooping portion 66 of the nut insertion portion 63 according to the second embodiment from which the thin portion having low strength is removed can have a good shape that does not adversely affect the ball circulation even when the lead angle of the ball rolling path 25 increases.

As described above, according to the ball screws 10 and 10A according to the embodiments, the nut insertion portion 42 of the circulation component 40 and the nut insertion portion 63 of the circulation component 60 can have sufficient strength while facilitating the machining of the nuts 30 and 30A.

The present invention is not limited to the embodiments described above, and can be appropriately modified, improved, or the like. Further, the material, the shape, the size, the number, the arrangement position, and the like of each component in the embodiments described above can be freely set and are not limited as long as the present invention can be implemented.

The ball screw according to the present invention is used for, for example, an XY stage used for high-precision machining, positioning of an apparatus that performs measurement, and semiconductor manufacturing. The ball screw is used in, for example, a machine tool (a machining center, a lathe, a grinder, or the like), a measuring machine (a three-dimensional measuring device), and a semiconductor manufacturing apparatus (an exposure apparatus, a table for an inspection probe, or the like).

Here, the features of the embodiments of the ball screw according to the present invention described above will be briefly summarized and listed in the following [1] to [4].
[1] A ball screw (10, 10A) including
   a screw shaft (20) having a spiral screw shaft side raceway groove (21) formed on an outer peripheral surface,
   a nut (30, 30A) having a spiral nut side raceway groove (31) formed on an inner peripheral surface so as to face the screw shaft side raceway groove (21), and having a pair of through holes (32, 32A) that communicate an outer peripheral surface (33) with the nut side raceway groove (31),
   a plurality of balls (26) that roll in a ball rolling path (25) having the screw shaft side raceway groove (21) and the nut side raceway groove (31), and
   a circulation component (40, 60) that is attached to the through hole (32, 32A) and that forms a ball circulation path (45, 65) for circulating the balls (26) rolling in the ball rolling path (25),
   in which the through hole (32, 32A) has a circular cross section obliquely penetrating along a lead angle of the nut side raceway groove (31) in an inner diameter direction and communicating with the nut side raceway groove (31),
   in which the circulation component (40, 60) includes a cylindrical nut insertion portion (42, 63) that has a ball scooping portion (44, 66) provided at a distal end and that is fitted into the through hole (32, 32A), a semi-cylindrical portion (46, 69) provided at a distal end of the ball scooping portion (44, 66) such that a rolling surface (45a, 45b, 45c; 65a, 65b) of the ball circulation path (45, 65) is continuous with a raceway surface (31a) of the nut side raceway groove (31), and a tongue portion (47, 67) provided at the distal end of the ball scooping portion (44, 66) so as to enter the screw shaft side raceway groove (21), and
   in which a center line (C) of the nut insertion portion (42, 63) is closer to an axis (O) of the nut with respect to a ball center locus (L) of the balls (26) scooped from the screw shaft side raceway groove (21) in a tangential direction.
   According to the ball screw (10, 10A) having the configuration in [1] described above, the through hole (32, 32A) formed in the nut (30, 30A) has a circular cross section. Therefore, the machining of the through hole (32, 32A) in the nut (30, 30A) can be performed as single hole machining without oval machining that causes an increase in cost.
   In the ball screw (10, 10A) in this configuration, by appropriately setting the distance (S) between the center line (C) of the nut insertion portion (42, 63) and the ball center locus (L), a thickness corresponding to the distance (S) can be secured between the outer diameter of the nut insertion portion (42, 63) and the inner diameter of the ball circulation path (45, 63). Therefore, according to the ball screw (10, 10A) in this configuration, it is possible to easily secure a thickness for imparting sufficient strength to the semi-cylindrical portion (46, 69) and the tongue portion (47, 67) of the nut insertion portion (42, 63) in the ball screw (10, 10A).
[2] The ball screw (10) according to [1] described above,
   in which the ball scooping portion (44) is separate from the base portion (43) of the nut insertion portion (42).
   According to the ball screw (10) having the configuration in [2] described above, the base portion (43) in the nut insertion portion (42) and the ball scooping portion (44) can be formed using an optimum manufacturing method corresponding to each function. That is, the manufacturing cost of the nut insertion portion (42) can be reduced.
[3] The ball screw (10) according to [2] described above,
   in which a rotation-preventing step portion (48) configured to prevent the ball scooping portion (44) from rotating relative to the base portion (43) of the nut insertion portion (42) about the center line (C) of the nut insertion portion (42) is formed on abutting surfaces between the base portion (43) of the nut insertion portion (42) and the ball scooping portion (44).
   According to the ball screw (10) having the configuration in [3] described above, it is possible to prevent the cylindrical ball scooping portion (44) fitted into the through hole (32) having a circular cross section from rotating about the center line (C) in the through hole (32).
[4] The ball screw (10A) according to [1] described above,
   in which the circulation component (60) has a shape in which at least the ball scooping portion (66) is divided into two in an axis (O) direction of the nut (30A).

According to the ball screw (10A) having the configuration in [4] described above, it is easy to form the ball scooping portion (66) of the nut insertion portion (63) so as to have a shape obtained by removing the thin portion in which the strength cannot be ensured in the end portions of the semi-cylindrical portion (69) and the tongue portion (67) at the abutting end portions of the two divided circulation components (the first circulation component 61 and the second circulation component 62). Therefore, the ball scooping portion (66) of the nut insertion portion (63) from which the thin portion having low strength is removed can have a good shape that does not adversely affect the ball circulation even when the lead angle of the ball rolling path (25) increases.

The present application is based on a Japanese patent application (No. 2023-204621) filed on December 4, 2023, contents of which are incorporated herein by reference.

### INDUSTRIAL APPLICABILITY

According to the ball screw in the present invention, it is possible to impart sufficient strength to the nut insertion portion of the circulation component while facilitating machining of the nut, and to reduce the manufacturing cost.

### REFERENCE SIGNS LIST

10: ball screw
20: screw shaft
21: screw shaft side raceway groove
25: ball rolling path
26: ball
30: nut
31: nut side raceway groove
31a: raceway surface
32: through hole
33: outer peripheral surface
40: circulation component
42: nut insertion portion
44: ball scooping portion
45: ball circulation path
45a: rolling surface
45b: rolling surface
45c: rolling surface
46: semi-cylindrical portion
47: tongue portion

## Claims

1. A ball screw including
a screw shaft having a spiral screw shaft side raceway groove formed on an outer peripheral surface,
a nut having a spiral nut side raceway groove formed on an inner peripheral surface so as to face the screw shaft side raceway groove, and having a pair of through holes that communicate an outer peripheral surface with the nut side raceway groove,
a plurality of balls that roll in a ball rolling path having the screw shaft side raceway groove and the nut side raceway groove, and
a circulation component that is attached to the through hole and that forms a ball circulation path for circulating the balls rolling in the ball rolling path,
wherein the through hole has a circular cross section obliquely penetrating along a lead angle of the nut side raceway groove in an inner diameter direction and communicating with the nut side raceway groove,
wherein the circulation component includes a cylindrical nut insertion portion that has a ball scooping portion provided at a distal end and that is fitted into the through hole, a semi-cylindrical portion provided at a distal end of the ball scooping portion such that a rolling surface of the ball circulation path is continuous with a raceway surface of the nut side raceway groove, and a tongue portion provided at the distal end of the ball scooping portion so as to enter the screw shaft side raceway groove, and
wherein a center line of the nut insertion portion is closer to an axis of the nut with respect to a ball center locus of the balls scooped from the screw shaft side raceway groove in a tangential direction.

2. The ball screw according to claim 1,
wherein the ball scooping portion is separate from a base portion of the nut insertion portion.

3. The ball screw according to claim 2,
wherein a rotation-preventing step portion configured to prevent the ball scooping portion from rotating relative to the base portion of the nut insertion portion about the center line of the nut insertion portion is formed on abutting surfaces between the base portion of the nut insertion portion and the ball scooping portion.

4. The ball screw according to claim 1,
wherein the circulation component has a shape in which at least the ball scooping portion is divided into two in an axis direction of the nut.
